# FASCICULE DE BREVET EUROPEEN

(11) **EP 0 664 158 B1**
(45) Date de publication et mention de la délivrance du brevet: **09.09.1998**
(21) Numéro de dépôt: 95400082.4
(22) Date de dépôt: 17.01.1995
(51) Int. Cl.: B01J 21/18, B01J 21/16, B01J 37/00

(54) **Procédé de réalisation d'un composite actif et composite actif réalisé à partir de ce procédé**
Verfahren zur Herstellung einer aktiver Zusammensetzung und aktive Zusammensetzung hergestellt
Realisation process of an active composite and active composite realised with this process

(30) Priorité: 19.01.1994 FR 9400513
(43) Date de publication de la demande: 26.07.1995
(73) Titulaire: ELF AQUITAINE, 92400 Courbevoie (FR)
(72) Inventeur: Spinner, Bernard, F-66200 Corneilla Del Vercol (FR); Prosdocimi, Jacques, F-66680 Canohes (FR)
(74) Mandataire: Timoney, Ian Charles Craig

(56) Documents cités:
- EP-A- 0 211 224
- DE-A- 4 140 455
- FR-A- 2 461 687

## Description

La présente invention se rapporte à un procédé de réalisation d'un composite actif constitué d'un support et d'un agent actif. Le support est poreux et chimiquement inerte, de façon à permettre des interactions entre l'agent actif, dispersé dans le support, et un flux gazeux ou liquide. La présente invention se rapporte également à un tel composite actif.

Ce composite actif est conçu pour être utilisé exclusivement dans des systèmes thermochimiques.

Dans le domaine des pompes à chaleurs chimiques fondées sur la thermicité de la réaction entre un solide et un gaz, ou de l'adsorption d'un gaz sur un solide, on utilise un mélange d'un matériau divisé, tel que le graphite expansé, et d'un réactif solide, par exemple un sel, ou respectivement d'un adsorbant comme une zéolithe. Le mélange de graphite expansé et de ce solide, siège d'une réaction chimique ou d'une adsorption physique, présente de nombreux avantages lors d'une réaction chimique ou d'une adsorption physique entre le solide et un gaz. Le graphite expansé se présentant sous forme de feuillets a une très grande surface spécifique et permet la diffusion du gaz même en milieu confiné. De plus, la conductibilité thermique du mélange est importante.

Dans le document WO 91/15292, il a été proposé de réaliser un composite actif en préparant un support formé d'un bloc de graphite expansé recomprimé qui est ensuite imprégné de l'extérieur, par exemple, par une solution d'un sel, le support imprégné étant ensuite séché pour réaliser le composite actif. Le composite actif ainsi réalisé a une conductibilité thermique nettement supérieure à celle du graphite expansé en feuillets, tout en gardant une porosité importante aux flux gazeux.

Malgré des avantages indéniables, le composite actif préparé selon le procédé décrit dans le document WO 91/15292 ne donne pas entièrement satisfaction. En effet, quand on utilise le composite actif pour contenir un sel et constituer le siège d'une réaction chimique avec un gaz, l'absorption du gaz dans le sel provoque une expansion de volume des cristaux de sel, entraînant une déformation des feuillets de graphite autour des cristaux. De plus, lors d'une désorption du gaz, les cristaux de sel se contractent. L'attraction physique entre les cristaux et les feuillets de graphite provoque une déformation de ces feuillets lors de la contraction des cristaux.

Ce type de composite actif trouve une utilisation dans des systèmes thermochimiques dans lesquels un bloc du composite est disposé dans une enceinte métallique, la paroi du bloc étant en contact avec un échangeur, celle-ci étant externe au bloc en contact avec un réacteur-échangeur, ou au contraire interne en contact avec des tubes échangeurs traversant le bloc. En phase de désorption du gaz, la contraction des cristaux, et la déformation des feuillets entraînent une contraction générale du bloc avec comme conséquence que la paroi du bloc se détache de l'intérieur de l'enceinte. Ceci réduit de façon importante le coefficient de transfert de chaleur entre le bloc et l'enceinte.

Le document FR-A-2626496 décrit un procédé d'amélioration des caractéristiques d'absorption et de désorption d'un gaz par un milieu réactionnel dans lequel on mélange le milieu réactionnel, constitué d'un sel, avec du graphite expansé et un deuxième produit expansé de structure rigide et de forte pénétrabilité. Ce deuxième produit comprend un minéral lamellaire hydraté exfolié, par exemple de la vermiculite ou de la perlite.

Le mélange décrit dans le document FR-A-2624696 est en forme de poudre de faible densité, et contient le sel sous forme pulvérulente. Il n'est pas envisagé dans ce document de recomprimer le mélange pulvérulent afin de former un bloc de réactif tel que celui décrit dans le document WO 91/15292. Toutefois, si l'on cherchait à former un tel bloc à partir du mélange pulvérulent du document FR-A-2626496, ce bloc subirait les inconvénients décrits précédemment, car les particules de sel dans ce mélange se trouvant dispersées à la fois entre les feuillets de graphite expansé et entre les lamelles de vermiculite, provoqueraient la même déformation de la structure lors des adsorption et désorption du gaz, du fait de la présence de particules de sel dans les feuillets de graphite.

La présente invention a pour objet un composite actif qui est capable d'amortir les changements de volume de l'agent actif qu'il contient.

Pour ce faire, l'invention propose un procédé de réalisation d'un composite actif constitué d'un support et d'un agent actif, comportant les étapes de :
- mélange de graphite expansé et d'un composé lamellaire exfolié,
- recompression du mélange afin de former un support ayant une densité de graphite comprise entre 0,03 et 0,5 kg/dm³.
- imprégnation du support par l'agent actif.

De préférence, l'étape d'imprégnation de l'agent actif dans le support comprend les étapes de :
- préparation d'une solution de l'agent actif ;
- immersion du support dans la solution ; et
- séchage du support imprégné.

L'invention propose, de plus, un composite actif réalisé à partir du procédé selon la présente invention, comprenant un support formé d'un mélange de graphite expansé et d'un composé lamellaire exfolié, et un agent actif, caractérisé en ce qu'il comprend en poids :
- 10 à 80 % d'agent actif,
- 2 à 20 % de composé lamellaire exfolié,
- 10 à 90 % de graphite expansé, le total des composants étant égal à 100 %.

On entend par "composé lamellaire exfolié" des produits obtenus à partir de minéraux lamellaires hydratés exfoliés. Ces produits peuvent être notamment de la vermiculite, de la perlite ou des produits obtenus par exfoliation, en particulier à partir d'oxydes type SiO₂, Al₂ O₃ (argiles). Le groupe des kandites (épaisseur de feuillet de 7 A^{O}) et des illites (épaisseur de feuillet de 1O A^{O}) est moins intéressant que les smectites et que le groupe de la vermiculite (épaisseur des feuillets de 14,5 à 15 A^{O}). Seules les vermiculites ont la propriété de s'expanser de manière aussi considérable.

De préférence, le composé lamellaire exfolié comprend de la vermiculite, un silicate d'aluminium et de magnésium hydraté.

La structure poreuse particulière du composé lamellaire exfolié a pour résultat que, lors de l'imprégnation du support par l'agent actif, ce dernier se fixe de façon préférentielle sur le composé lamellaire exfolié grâce à sa très importante capacité d'absorption de la solution. Lors du séchage, l'agent actif cristallise à l'intérieur du composé lamellaire exfolié et non pas entre les feuillets de graphite expansé. Ceci a pour résultat que le composite actif selon l'invention ne présente pas les inconvénients de celui décrit dans le document WO 91/15292.

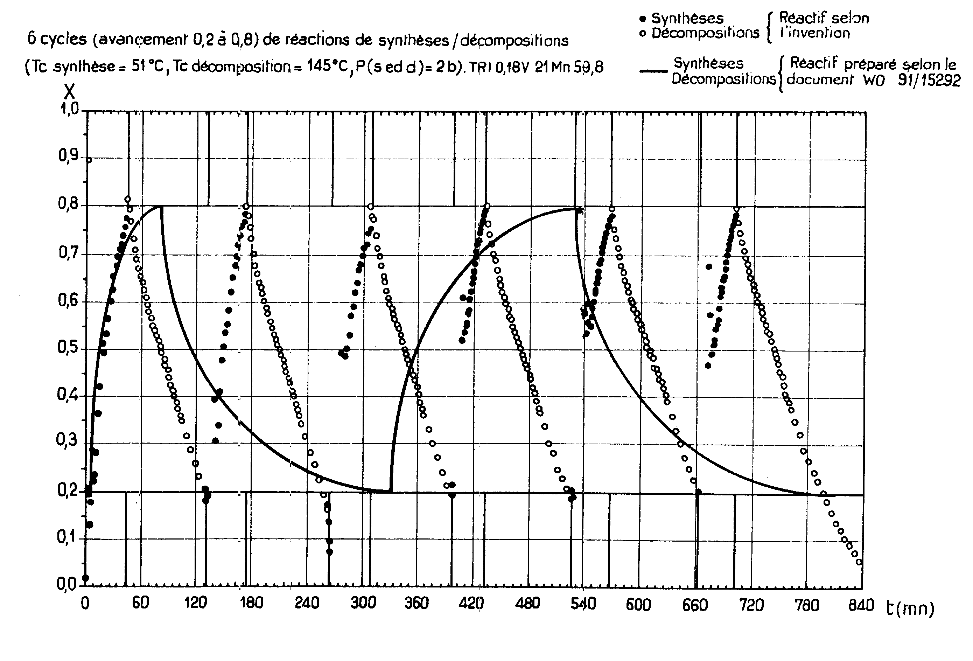

D'autres caractéristiques et avantages de la présente invention apparaîtront plus clairement à la lecture de la description ci-après, faite en référence au dessin annexé dans lequel la figure unique représente des courbes de réactions de synthèses / décompositions en fonction du temps d'une absorption de gaz utilisant comme siège de réaction le produit selon l'invention et un composé de l'art antérieur.

Selon un premier aspect de l'invention, un procédé, pour réaliser un composite actif, dans lequel le support comprend du graphite expansé et de la vermiculite et l'agent actif renferme un sel, s'effectue comme suit :

On réalise un support ayant la forme d'un bloc de densité de graphite comprise entre 0,03 et 0,5 kg/dm³ à partir d'un mélange de graphite expansé pulvérulent de densité comprise entre 0,0001 et 0,02 et de vermiculite sous la forme de particules ayant une granulométrie comprise entre 1 mm et 5 mm, ce mélange étant recomprimé afin de former le bloc. Ensuite on prépare une solution saturée ou non du sel à utiliser, puis on immerge le bloc dans la solution. Du fait de la structure extrêmement poreuse de la vermiculite, la solution est absorbée de manière préférentielle par la vermiculite et ne s'infiltre qu'à faible degré dans les interstices du graphite expansé. Le bloc ainsi imprégné est ensuite séché, ce qui entraîne la cristallisation du sel entre les feuillets de la vermiculite, un pourcentage très faible du sel cristallisant entre les feuillets du graphite.

### Exemple I

On prépare un mélange renfermant, en poids, 48 % de graphite naturel expansé, de densité de 0,01, et 52 % de vermiculite de granulométrie comprise entre 1 mm et 5 mm. Ce mélange est recomprimé dans un ensemble piston - cylindre afin de former un support dont la masse volumique apparente du graphite est de 0,18 kg/l. Ensuite, le bloc résultant est imprégné d'un solution saturée de MnCl₂, afin de former un composite actif, de telle manière qu'après séchage du bloc, la composition en % en poids soit 59,5 % de MnCl₂, 21 % de vermiculite et 19,5 % de graphite naturel.

Sur la figure unique sont représentées des courbes de l'avancemnt d'une réaction en fonction du temps pour un échantillon de composite actif réalisé selon cet exemple, et pour un échantillon préparé selon le document WO 91/15292 contenant le même pourcentage de MnCl₂.

Chaque échantillon utilisé était un cylindre de composite actif, de diamètre égal à 15cm ayant une hauteur de 10 cm, muni d'un passage axial pour la diffusion du gaz.

L'échantillon était disposé dans un chambre de réaction comportant des échangeurs de chaleur en périphérie.

Les conditions des essais étaient les suivantes :
- Pression de NH3 : 2 bars
- Température du fluide caloporteur :
   - lors de la synthèse de MnCl₂.2NH₃ en MnCl₂.6NH₃ = 51°C
   - lors de la décomposition de MnCl₂.6NH₃ en MnCl₂.2NH₃ = 145°C

Les cycles successifs représentés sur la figure étaient effectués avec un avancement de la réaction de 0,2 à 0,8, ce qui correspond, en moyenne, à une synthèse de MnCl₂.2,8NH₃ à MnCl₂.5,2NH₃ et une décomposition de MnCl₂.5,2NH₃ à MnCl₂.2,8NH₃.

Comme on le voit sur la figure, les vitesses de synthèse et de décomposition sont nettement supérieures pour l'échantillon préparé selon l'invention.

Des essais additionnels ont montré une excellente reproductibilité des vitesses de synthèse et de décomposition des réactifs.

Le procédé selon l'invention peut être utilisé avec de nombreux agents actifs différents tels que ceux proposés par exemple dans le Tableau I. Par agent actif, on entend par exemple un solide réactif, un solide adsorbant ou un liquide absorbant.

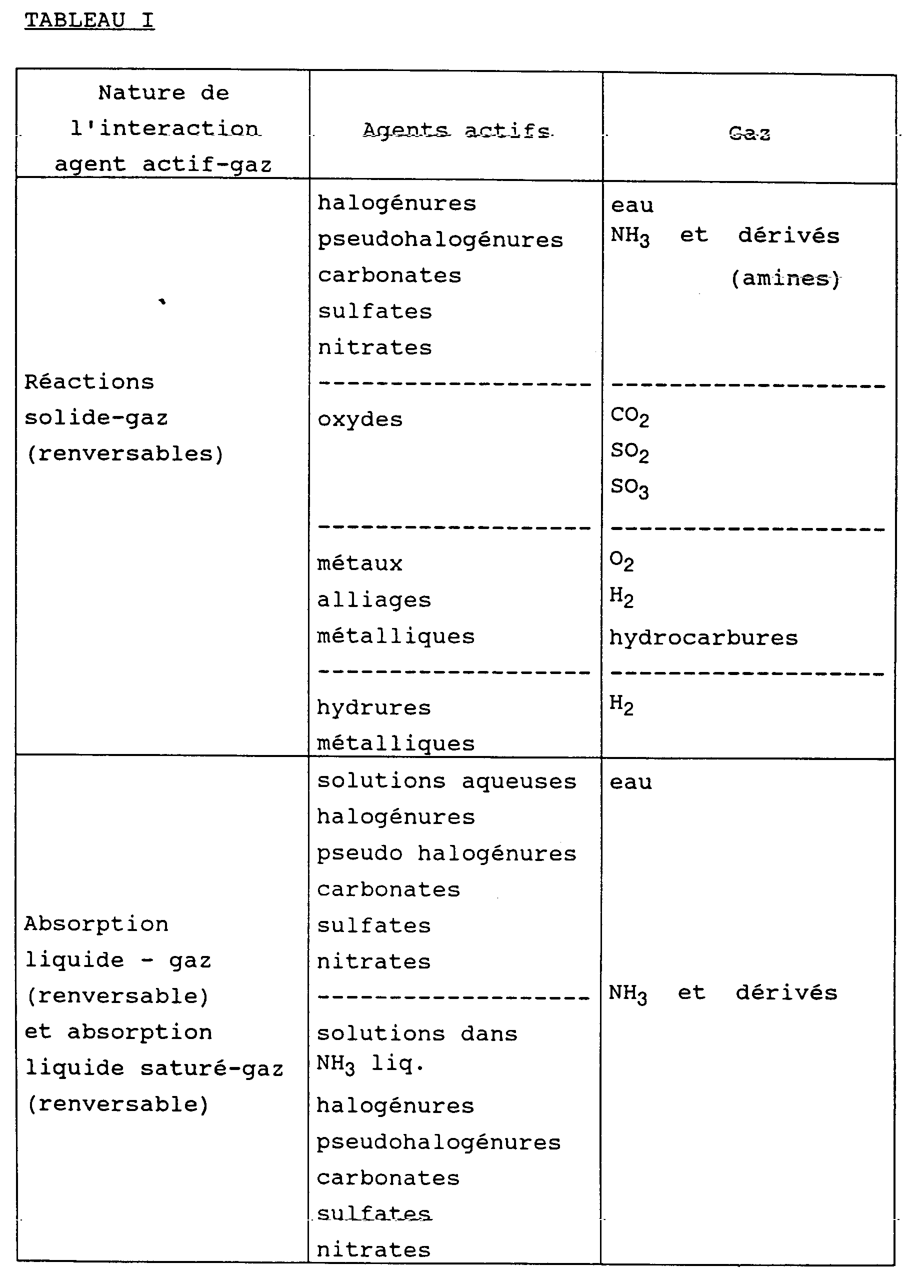

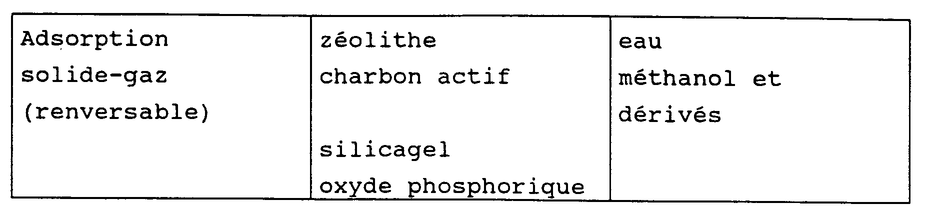

Dans le cas des chlorures, le tableau II précise la nature de liquides d'imprégnation solubilisant l'agent actif ou le mettant en suspension.

**TABLEAU II**

| | Liquide d'imprégnation | |
|---|---|---|
| Agent actif | de solubilisation | de suspension |
| CaCl₂ | eau ou alcool, acétone | |
| MnCl₂ | alcool | éther,NH₃ liquide |
| BaCl₂ | alcool | |
| NiCl₂ | alcool, NH₄OH | NH₃ liquide |
| CuCl₂ | acétone | |
| CoCl₂ | alcool, acétone éther | |
| SrCl₂ | alcool, acétone | NH₃ liquide |
| NaCl₂ | glycérine | |
| FeCl₂ | alcool, acétone | éther |
| NH₄Cl | alcool, NH₃ liquide | acétone, éther |
| CdCl₂ | alcool | acétone, éther |

On peut préparer des composites actifs selon l'invention comprenant en poids
- de 10 à 80 % d'agent actif,
- de 2 à 20 % de composé expansé lamellaire, et
- de 10 à 90 % de graphite expansé, le total des composants étant égal à 100 %.

La réalisation d'un composite actif à partir d'un composé lamellaire exfolié telle que décrite ci-dessus a pour résultat de permettre au composite d'absorber les changements de volume du sel qui se produisent lors des réactions chimiques avec un gaz. Un bloc du composite actif ne subit plus de dégradations telles que celles qui se présentaient dans les blocs de réactifs connus. Le contact entre un bloc de composite actif selon l'invention et la paroi d'une chambre de réacteur, dans laquelle le bloc est emmanché à force, reste intime même après une série importante de réactions. Le transfert de chaleur entre le bloc et la paroi est, donc, maintenu à un niveau important.

## Revendications

1. Procédé de réalisation d'un composite actif constitué d'un support et d'un agent actif, comportant les étapes de :
- mélange de graphite expansé et d'un composé lamellaire exfolié,
- recompression du mélange afin de former un support ayant une densité de graphite comprise entre 0,03 et 0,5, et
- imprégnation de support par l'agent actif

2. Procédé selon la revendication 1 caractérisé en ce que l'étape d'imprégnation du support par l'agent actif comprend les étapes de :
- préparation d'une solution de l'agent actif,
- immersion du support dans la solution ; et
- séchage du support imprégné.

3. Composite actif réalisé à partir du procédé de la revendication 1 comprenant un support formé d'un mélange de graphite expansé, et un agent actif, caractérisé en ce qu'il comprend en poids :
- 10 à 80 % d'agent actif ;
- 2 à 21 % de composé lamellaire exfolié ;
- 10 à 90 % de graphite expansé, le total des composants étant égal à 100 %.

## Claims

1. Process for the production of an active composite consisting of a substrate and an active agent, which process comprises the following steps:
- mixing expanded graphite and an exfoliated lamellar compound,
- re-pressing the mixture in order to form a substrate having a graphite density of from 0.03 to 0.5, and
- impregnating the substrate with the active agent.

2. Process according to claim 1, characterised in that the step of impregnating the substrate with the active agent comprises the following steps:
- preparing a solution of the active agent,
- immersing the substrate in the solution, and
- drying the impregnated substrate.

3. Active composite produced by means of the process of claim 1, consisting of a substrate formed from a mixture of expanded graphite, and an active agent, characterised in that it contains, by weight:
- from 10 to 80% active agent,
- from 2 to 21% exfoliated lamellar compound,
- from 10 to 90% expanded graphite, the total of the components being equal to 100%.

## Patentansprüche

1. Verfahren zur Herstellung eines aktiven Verbundstoffs, der aus einem Träger und einem Wirkstoff besteht, das folgende Stufen umfaßt:
Mischen des expandierten Graphits mit einer aufgeblätterten lamellären Verbindung,
Wiederverdichtung des Gemisches zur Bildung eines Trägers mit einer Graphitdichte von 0,03 bis 0,5 und
Tränken des Trägers mit dem Wirkstoff.

2. Verfahren nach Anspruch 1, dadurch **gekennzeichnet,** daß die Stufe der Tränkung des Trägers mit dem Wirkstoff folgende Stufen umfaßt:
Herstellung einer Lösung des Wirkstoffs,
Eintauchen des Trägers in die Lösung und
Trocknung des getränkten Trägers.

3. Aktiver Verbundstoff, hergestellt nach dem Verfahren nach Anspruch 1, der einen aus einem Gemisch aus expandiertem Graphit gebildeten Träger und einen Wirkstoff umfaßt, dadurch **gekennzeichnet,** daß der Verbundstoff folgende Komponenten umfaßt:
10 bis 80 Gew.-% Wirkstoff,
2 bis 21 Gew.-% aufgeblätterte lamelläre Verbindung und
10 bis 90 Gew.-% expandierter Graphit,
wobei die Gesamtheit der Komponenten 100 % beträgt.
